# EUROPÄISCHE PATENTSCHRIFT

(11) **EP 1 547 345 B1**
(45) Veröffentlichungstag und Bekanntmachung des Hinweises auf die Patenterteilung: **11.04.2007**
(21) Anmeldenummer: 03798862.3
(22) Anmeldetag: 07.08.2003
(51) Int. Cl.: H04L 29/06

(54) **DATENKOMMUNIKATIONSSYSTEM, RECHNER, SOWIE DATENKOMMUNIKATIONSVERFAHREN ZUM PARALLELEN BETRIEB VON STANDARD-BASIERTEN UND PROPRIETÄREN RESSOURCEN**
DATA COMMUNICATIONS SYSTEM, COMPUTER, AND DATA COMMUNICATIONS METHOD FOR PARALLELLY OPERATING STANDARD-BASED AND PROPRIETARY RESOURCES
SYSTEME DE TRANSMISSION DE DONNEES, ORDINATEUR, PROCEDE DE TRANSMISSION DE DONNEES POUR L'EXPLOITATION PARALLELE DE RESSOURCES PROPRIETAIRES ET REPOSANT SUR DES NORMES

(30) Priorität: 30.09.2002 DE 10245562
(43) Veröffentlichungstag der Anmeldung: 29.06.2005
(73) Patentinhaber: SIEMENS AKTIENGESELLSCHAFT, 80333 München (DE)
(72) Erfinder: LANGER, Uwe, 33098 Paderborn (DE); BOZIONEK, Bruno, 33178 Borchen (DE); ZIMMERMANN, Rainer, 33106 Paderborn (DE)
(86) Internationale Anmeldenummer: PCT/DE2003/002662
(87) Internationale Veröffentlichungsnummer: WO 2004/032448

(56) Entgegenhaltungen:
- US-A- 6 130 880
- US-A1- 2001 043 608
- HUITEMA C ET AL: "AN ARCHITECTURE FOR RESIDENTIAL INTERNET TELEPHONY SERVICE" IEEE NETWORK, IEEE INC. NEW YORK, US, Bd. 13, Nr. 3, Mai 1999 (1999-05), Seiten 50-56, XP000870631 ISSN: 0890-8044
- TOGA J ET AL: "ITU-T STANDARDIZATION ACTIVITIES FOR INTERACTIVE MULTIMEDIA COMMUNICATIONS ON PACKET-BASED NETWORKS: H.323 AND RELATED RECOMMENDATIONS" COMPUTER NETWORKS AND ISDN SYSTEMS, NORTH HOLLAND PUBLISHING. AMSTERDAM, NL, Bd. 31, Nr. 3, 11. Februar 1999 (1999-02-11), Seiten 205-223, XP000700319 ISSN: 0169-7552

## Beschreibung

Die Erfindung betrifft ein Datenkommunikationssystem gemäß Oberbegriff des Anspruchs 1, einen Rechner zur Verwendung in einem Datenkommunikationssystem, sowie ein Datenkommunikationsverfahren gemäß Oberbegriff des Anspruchs 18.

Die Datenübertragung-über das Internet nimmt weiter an Bedeutung zu. Das Internet ist ein weltweites Datennetz, bzw. besteht - genauer - aus einer Vielzahl verschiedener, miteinander z.B. über sog. Router verbundener Datennetzwerke.

Im Internet kommuniziert jeweils ein oder mehrere zentrale Rechner bzw. zentrale Computer (Serverrechner) mit entfernt hiervon angeordneten Clients, z.B. einem - stationären oder tragbaren - Computer, einem Telefon, etc. (und/oder mit weiteren, zentralen Rechnern).

Die Kommunikation erfolgt unter Verwendung von sog. Internetprotokollen, insbesondere dem Transmission Control Protocol (TCP) und dem Internet Protocol (IP), kurz TCP/IP.

Hierzu ist z.B. auf dem jeweiligen Client und dem jeweiligen zentralen Rechner eine Software geladen, die das TCP/IP Protokoll verstehen und auswerten kann (Socket oder TCP/IP Stack).

Immer mehr private (- d.h. i.A. nur von bestimmten, autorisierten Personen nutzbare -) Datennetzwerke beruhen auf der Technologie und dem Konzept des Internets. Derartige Datennetzwerke werden Intranets genannt.

In einem Intranet kommuniziert - entsprechend wie beim Internet - z.B. ein entsprechender zentraler Rechner - unter Nutzung von Internetprotokollen, insbesondere dem TCP/IP-Protokoll - mit entfernt hiervon angeordneten Clients, z.B. - stationären oder tragbaren - Computern, Telefonen, etc. (und/oder mit weiteren, zentralen Rechnern).

Zur Übertragung der entsprechenden Intranet-Daten werden diese jeweils in einzelne Pakete aufgeteilt, und dann - auf asynchrone Weise - versendet.

Auf diese Weise ist beispielsweise möglich, dass zwei an das Intranet angeschlossene Clients Sprach- und/oder Bilddaten austauschen, z.B. miteinander "telefonieren" (VoIP = Voice over IP), d.h. Sprach-Telefoniedaten austauschen, und/oder Bild-Telefoniedaten, etc.

Des weiteren können - mehr als zwei, z.B. drei, vier oder fünf - Clients über das Intranet eine Telefon- bzw. Videokonferenz abhalten.

Dabei fungiert ein an das Intranet angeschlossener Rechner als Konferenz-Steuereinheit, z.B. als "Mischpult", um die von den verschiedenen, an der Konferenz teilnehmenden Clients jeweils separat an den Rechner gesendeten Sprach- und/oder Bild-Telefoniedaten zusammenzuführen bzw. zu mischen, und dann die entsprechenden - gemischten - Daten über das Intranet an die entsprechenden (übrigen) an der Konferenz teilnehmenden Clients zu verschicken.

Zum Austausch der Telefon- bzw. Videokonferenz-Daten kann z.B. ein auf das TCP/IP-Protokoll aufgesetztes, "offenes" bzw. standardisiertes Protokoll verwendet werden, z.B. das H.323 Protokoll.

Alternativ können in einem Intranet statt eines einzelnen, als Konferenz-Steuereinheit fungierenden Rechners auch mehrere Konferenz-Steuereinheits-Rechner vorgesehen sein, wobei jeder der Rechner - basierend auf dem o.g. Standard-Protokoll, insbesondere dem H.323 Protokoll - zu einem bestimmten Zeitpunkt maximal für eine vorbestimmte Anzahl von Clients als "Mischpult" bzw. maximal für eine vorbestimmte Anzahl an Telefon- bzw. Videokonferenzen als Konferenz-Steuereinheit fungieren kann.

Kann - aufgrund Überlastung - einer der Konferenz-Steuereinheits-Rechner eine von bestimmten Clients stammende Anfrage nach Durchführung einer Telefon- bzw. Videokonferenz nicht bearbeiten, übernimmt ein anderer Konferenz-Steuereinheits-Rechner dann die Steuerung der entsprechenden Telefon- bzw. Videokonferenz (d.h. fungiert für die jeweiligen Clients als Konferenz-Steuereinheit, insbesondere als "Mischpult").

Intranets können mittels eines entsprechenden, zentralen Rechners an das Internet angeschlossen sein, und/oder über denselben, oder einen weiteren zentralen Rechner, z.B. eine entsprechende Telekommunikationsanlage, insbesondere einen PBX-Rechner (PBX = Private Branch Exchange) an das Telefonnetz.

Die Datenkommunikation über das Telefonnetz kann z.B. auf Basis von POTS- (Plain Old Telephone Service), oder z.B. auf Basis von ISDN- (Integrated Services Digital Network) Datenübertragungsprotokollen erfolgen, oder z.B. auf Basis von xDSL- (x Digital Subscriber Line) Datenübertragungsprotokollen, z.B. mittels ADSL-Datenübertragung (ADSL = Asynchronous Digital Subscriber Line).

Mit Hilfe der Telekommunikationsanlage bzw. des PBX-Rechners wird erreicht, dass bestimmte, an das Intranet angeschlossene Clients, z.B. Telefone, mit - externen - an das Telefonnetz angeschlossenen Geräten, z.B. Telefonen kommunizieren können.

Zur Kommunikation zwischen dem PBX-Rechner und den Clients kann beispielsweise ein auf das TCP/IP-Protokoll aufgesetztes, firmen-spezifisches Protokoll verwendet werden.

Soll zwischen mehreren (insbesondere mehr als zwei, z.B. drei, vier oder fünf) - externen und/oder internen - TDM- bzw. PCM-Clients bzw. -Geräten eine (Telefon-)Konferenz abgehalten werden, kann der jeweilige PBX-Rechner als Konferenz-Steuereinheit fungieren, insbesondere als "Mischpult", um die von den verschiedenen, an der Konferenz teilnehmenden Clients bzw. Geräten jeweils separat an den PBX-Rechner gesendeten (Sprach-)Daten zusammenzuführen bzw. zu mischen, und dann die entsprechenden - gemischten - Daten an die entsprechenden (übrigen) an der Konferenz teilnehmenden Clients bzw. Geräte, insbesondere Telefone zu verschicken.

In der US 2001/0043608 A1 ist ein Multimediacenter beschrieben, bei dem eine Telefon- und/oder Video-Datenverarbeitungs-Einrichtung bzw. ein Gateway mit einer Datenverarbeitungs-Einrichtung bzw. einem Gatekeeper verbunden ist, wobei in der Datenverarbeitungs-Einrichtung bzw. im Gatekeeper empfangene Daten hinsichtlich der Protokolle derart umgewandelt und an die Gateways weitergeleitet werden, dass diese von Terminals mit unterschiedlichen Protokollen für Video-, Daten- und Telefondienste genutzt werden können.

Aus HUITEMA C et al, "An architecture for residential internet telephony service", IEEE Network, New York, US, Bd. 13, Nr. 3 Mai 1999, Seiten 50-56, XP000870631, ISSN: 0890-8044 ist eine Architektur für einen Residential Internet Telephony Service bekannt, bei der ein Internet-Telefondienst über einen Residential Gateway realisiert wird. Für die Protokollbearbeitung zwischen dem Residential Gateway und dem Internet ist ein Call-Agent vorgesehen, indem insbesondere für den Telefondienst-Protokolle beispielsweise Teilnehmerprotokoll oder Nr.7-Protokoll an das Internet Protokoll und umgekehrt angepasst werden. Hierbei können im Residential-Gateway unterschiedliche Übertragungsprotokolle für Videodienste, Multimediakonferenzen oder Telefondienste bereitgestellt werden.

Die Erfindung hat zur Aufgabe, für ein Datenkommunikationssystem, einen Rechner, sowie ein Datenkommunikationsverfahren das Ressourcenmanagement zu verbessern.

Sie erreicht dieses und weitere Ziele durch die Gegenstände der Ansprüche 1, 17 und 18.

Vorteilhafte Weiterbildungen der Erfindung sind in den Unteransprüchen angegeben.

Gemäß einem Grundgedanken der Erfindung wird ein Datenkommunikationssystem mit mehreren Clients zur Verfügung gestellt, wobei eine - ein bestimmtes, erstes Datenübertragungs-Protokoll unterstützende - Telefon- und/oder Videokonferenz-Datenverarbeitungs-Einrichtung vorgesehen ist, und eine - sowohl das erste, als auch ein zweites Datenübertragungs-Protokoll unterstützende - Datenverarbeitungs-Einrichtung, die empfangene Daten derart umwandelt, und an die Telefon- und/oder Videokonferenz-Datenverarbeitungs-Einrichtung weiterleitet, dass diese sowohl von das erste, als auch das zweite Datenübertragungs-Protokoll unterstützenden Clients genutzt werden kann. Zusätzlich ist eine Ressourcen-Steuer-Einrichtung vorgesehen, die in Fällen, in denen eine Anfrage durch eine der Telefon- und/oder Videokonferenz-Datenverarbeitungs-Einrichtung nicht bearbeitet werden kann veranlasst, dass eine andere der Videokonferenz-Datenverarbeitungs-Einrichtungen die Anfrage übernimmt.

Vorteilhaft kann das zweite Datenübertragungs-Protokoll ein offenes, standardisiertes Protokoll sein, z.B. ein H.323- bzw. H.225/H.245-basiertes Protokoll, und das erste Datenübertragungs-Protokoll ein proprietäres bzw. generisches Protokoll, z.B. ein PCM- bzw. TDM-basiertes Protokoll.

Damit wird ermöglicht - im Gegensatz zum Stand der Technik - H.323-Standard-basierte, und proprietäre, z.B. PCM- bzw. TDMbasierte Ressourcen - parallel - zu betreiben und ein einheitliche Ressourcen-Management hierfür zu erreichen.

Im folgenden wird die Erfindung anhand mehrerer Ausführungsbeispiele und der beigefügten Zeichnung näher erläutert.

Dabei zeigen:
- Fig. 1:: eine schematische Darstellung eines Datenkommunikationssystems gemäß einem Ausführungsbeispiel der Erfindung; und
- Fig. 2:: eine schematische Darstellung des Aufbaus und der Funktionsweise eines beim in Figur 1 gezeigten System verwendeten Kommunikations-Steuerungs-Rechners.

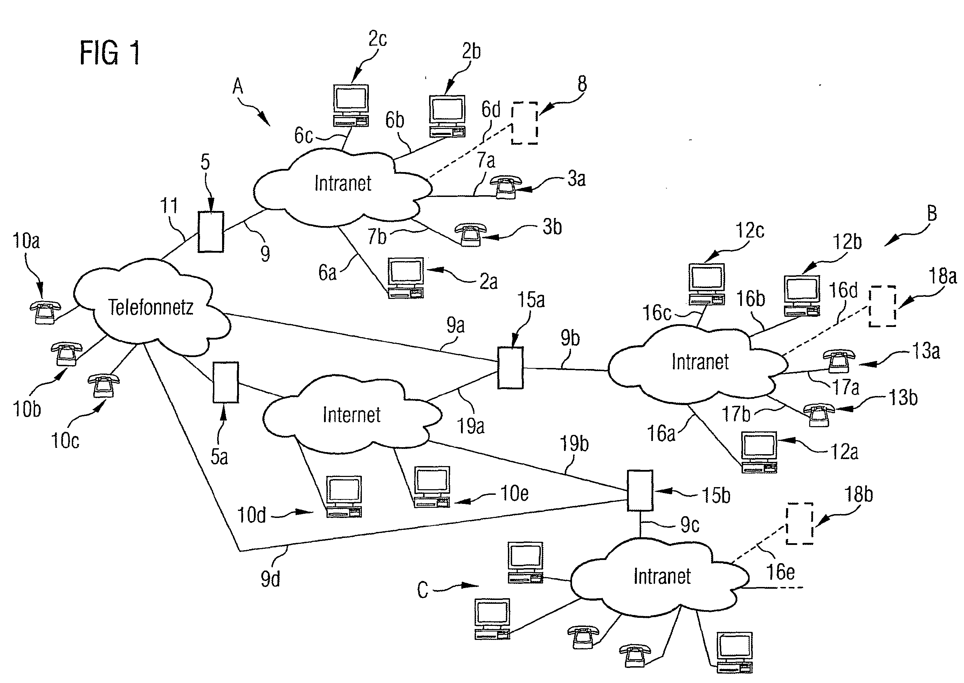

Beim in Fig. 1 gezeigten Datenkommunikationssystem 1 sind eine Vielzahl (z.B. 5 - 300, insbesondere 10 - 150) von Clients 2a, 2b, 2c, 3a, 3b, z.B. mehrere Telefone 3a, 3b, und mehrere Rechner 2a, 2b, 2c, an ein - erstes - Intranet-Datennetzwerk A angeschlossen.

Das erste Intranet-Datennetzwerk A weist eine Telekommunikationsanlage bzw. einen als Telekommunikationsanlage fungierenden zentralen Rechner 5, insbesondere einen PBX-Rechner (PBX = Private Branch Exchange) auf, der für die Clients 2a, 2b, 2c, 3a, 3b als Kommunikations-Steuerungs-Einrichtung fungiert, insbesondere als Telefon-Vermittlungsanlage, um das erste Intranet-Datennetzwerk A (bzw. die daran angeschlossenen Clients 2a, 2b, 2c, 3a, 3b) mit einem Telefonnetz (z.B. mit dem öffentlichen Telefonnetz) zu verbinden.

Der Anschluss des zentralen Rechners 5 bzw. der Clients 2a, 2b, 2c, 3a, 3b an das erste Intranet-Datennetzwerk A kann z.B. mittels - an ein entsprechendes Bussystem angeschlossener - Leitungen 6a, 6b, 6c, 7a, 7b, 9 erfolgen.

Die Clients 2a, 2b, 2c, 3a, 3b und der zentrale Rechner 5 kommunizieren - wie weiter unten noch genauer erläutert wird - unter Verwendung von Internetprotokollen, z.B. dem Transmission Control Protocol (TCP) bzw. dem Internet Protocol (IP), kurz: TCP/IP.

Hierzu ist z.B. auf dem jeweiligen Client 2a, 2b, 2c, 3a, 3b bzw. auf dem zentralen Rechner 5 eine Software (sog. Stack) geladen, die das entsprechende Internetprotokoll verstehen und auswerten kann.

Zur Übertragung von Daten zwischen den Clients 2a, 2b, 2c, 3a, 3b und dem zentralen Rechner 5 über das erste Intranet-Datennetzwerk A werden diese - wie bei Internet-Protokollen üblich - in einzelne Pakete aufgeteilt.

Kommuniziert einer der Clients 2a, 2b, 2c, 3a, 3b - über das Telefonnetz - mit einem entsprechenden, externen, nicht direkt an das erste Intranet-Datennetzwerk A angeschlossenen Gerät (z.B. einem Telefon 10a, 10b, 10c), werden die entsprechenden (vom jeweiligen Client 2a, 2b, 2c, 3a, 3b auf die o.g. Weise, d.h. Internet-Protokoll-basiert versendeten) Daten vom zentralen Rechner 5 in entsprechende POTS- (Plain Old Telephone Service), ISDN- (Integrated Services Digital Network), oder xDSL- (x Digital Subscriber Line) Daten umgesetzt, und über eine Leitung 11 an das Telefonnetz ausgegeben (bzw. werden umgekehrt die vom jeweiligen Telefon 10a, 10b, 10c über das Telefonnetz empfangenen POTS- bzw. ISDN- Daten vom zentralen Rechner 5 auf die o.g. Weise über das erste Intranet-Datennetzwerk A an den jeweiligen Client 2a, 2b, 2c, 3a, 3b weitergeleitet).

Wie in Fig. 1 weiter gezeigt ist, ist das Intranet-Datennetzwerk über die Telekommunikationsanlage bzw. den zentralen Rechner 5 - außer an das Telefonnetz - zusätzlich noch (bei Bedarf) an das Internet anschließbar (und zwar - indirekt - über das Telefonnetz, und einen Rechner 5a eines ISP (Internet-Service-Provider)).

Soll einer der Clients 2a, 2b, 2c, 3a, 3b mit einem an das Internet angeschlossenen Gerät, z.B. einem Computer 10d, 10e kommunizieren, wird vom zentralen Rechner 5 eine Telefonverbindung (z.B. eine POTS-, ISDN-, oder xDSL-, insbesondere ADSL-Verbindung) zum ISP-Rechner 5a hergestellt, der dann dem zentralen Rechner 5 bzw. dem jeweiligen Client 2a, 2b, 2c, 3a, 3b eine temporäre IP-Adresse (Internet Protocol-Adresse) zuordnet, und den Aufbau einer entsprechenden Internetverbindung veranlasst (so dass dann - über das Internet, und das Telefonnetz (und unter Zwischenschaltung des ISP-Rechners 5a, und des zentralen Rechners 5) - Daten zwischen dem jeweiligen Client 2a, 2b, 2c, 3a, 3b, und dem jeweiligen Computer 10d, 10e ausgetauscht werden können).

Gemäß Fig. 1 weist das Datenkommunikationssystem 1 - abgesehen vom ersten Intranet-Datennetzwerk A - noch eine Vielzahl weiterer, mit dem ersten Intranet-Datennetzwerk A verbundener bzw. verbindbarer Intranet-Datennetzwerke auf, z.B. ein - zweites - Intranet-Datennetzwerke B, und ein - drittes - Intranet-Datennetzwerk C, etc.

Das zweite und dritte Intranet-Datennetzwerk B, C weisen jeweils - entsprechend wie das erste Intranet-Datennetzwerk A - eine Vielzahl (z.B. 5 - 300, insbesondere 10 - 150) von Clients 12a, 12b, 12c, 13a, 13b auf, z.B. mehrere Telefone 13a, 13b, und mehrere Rechner 12a, 12b, 12c.
Das zweite und dritte Intranet-Datennetzwerk B, C sind ebenfalls - außer an das o.g. Telefonnetz - zusätzlich noch an das Internet angeschlossen, und zwar - im Unterschied zum ersten Intranet-Datennetzwerk A - direkt und fortwährend z.B. mittels entsprechender (fester) Standleitungen 19a, 19b.

Das zweite und das dritte Intranet-Datennetzwerk B, C weisen - entsprechend ähnlich wie das erste Intranet-Datennetzwerk A - jeweils eine Telekommunikationsanlage bzw. einen als Telekommunikationsanlage fungierenden zentralen Rechner 15a, 15b, insbesondere einen PBX-Rechner (PBX = Private Branch Exchange) auf, der für die Clients 12a, 12b, 12c, 13a, 13b als Kommunikations-Steuerungs-Einrichtung fungiert, insbesondere als Vermittlungsanlage, um das Intranet-Datennetzwerk (bzw. die daran angeschlossenen Clients 12a, 12b, 12c, 13a, 13b) mit dem Telefonnetz oder dem Internet zu verbinden. Der jeweilige zentrale Rechner 15a, 15b ist - über die entsprechende Standleitung 19a, 19b - permanent an das Internet angeschlossen (d.h. ständig "online").

Der Anschluss der jeweiligen zentralen Rechner 15a, 15b bzw. der Clients 12a, 12b, 12c, 13a, 13b an das zweite bzw. dritte Intranet-Datennetzwerk B, C kann z.B. entsprechend wie beim ersten Intranet-Datennetzwerk A mittels - an ein entsprechendes Bussystem angeschlossener - Leitungen 16a, 16b, 16c, 17a, 17b, 9b, 9c erfolgen.

Die Clients 12a, 12b, 12c, 13a, 13b und.der jeweilige zentrale Rechner 15a, 15b kommunizieren - wie weiter unten noch genauer erläutert wird - unter Verwendung von Internetprotokollen, z.B. dem Transmission Control Protocol (TCP) bzw. dem Internet Protocol (IP), kurz TCP/IP.

Hierzu ist z.B. auf dem jeweiligen Client 12a, 12b, 12c, 13a, 13b bzw. auf dem jeweiligen zentralen Rechner 15a, 15b eine Software (sog. Stack) geladen, die das entsprechende Internetprotokoll verstehen und auswerten kann.
Kommuniziert einer der Clients 12a, 12b, 12c, 13a, 13b mit einem entsprechenden, externen, nicht direkt ans Intranet-Datennetzwerk, jedoch ans Telefonnetz angeschlossenen Gerät (z.B. dem o.g. Telefon 10b), werden die entsprechenden (vom jeweiligen Client 12a, 12b, 12c, 13a, 13b auf die o.g. Weise, d.h. Internet-Protokoll-basiert versendeten) Daten vom jeweiligen zentralen Rechner 15a, 15b in entsprechende POTS-, ISDN- oder xDSL-Daten umgesetzt, und über eine Leitung 9a, 9d an das Telefonnetz ausgegeben (bzw. werden umgekehrt die vom Telefon 10b über das Telefonnetz empfangenen POTS-, ISDN- bzw. xDSL-Daten vom jeweiligen zentralen Rechner 15a, 15b auf die o.g. Weise über das Intranet-Datennetzwerk B, C an den jeweiligen Client 12a, 12b, 12c, 13a, 13b weitergeleitet).

Der jeweilige zentrale Rechner 15a, 15b bzw. die an ihn angeschlossenen Clients 12a, 12b, 12c, 13a, 13b verfügen über eine permanente - aus einer mehrstelligen Zahl bestehende - IP-Adresse (Internet Protocol-Adresse), so dass - nach Aufbau der entsprechenden Internet-Verbindung - Daten zwischen einem entsprechenden, an das Internet angeschlossenen Gerät, z.B. dem o.g. Computer 10d, und dem jeweiligen zentralen Rechner 15a, 15b ausgetauscht werden können, bzw. - unter Zwischenschaltung des jeweiligen zentralen Rechners 15a, 15b - zwischen dem jeweiligen, an das Internet angeschlossenen Gerät, z.B. dem Computer 10d, und dem jeweiligen Client 12a, 12b, 12c, 13a, 13b.

Wie in Fig. 1 weiter gezeigt ist, kann das Datenkommunikationssystem 1 - alternativ - einen oder mehrere jeweils über entsprechende Leitungen 6d, 16d, 16e an das jeweilige Intranet-Datennetzwerk A, B, C (bzw. an das entsprechende Bussystem) angeschlossene zentrale Rechner 8, 18a, 18b aufweisen (in Figur 1 gestrichelt dargestellt), die - auf herkömmliche, an sich bekannte Weise - als Steuereinheiten zur Durchführung entsprechender Telefon- und/oder Videokonferenzen verwendet werden können (auf die aber auch - wie weiter unten noch genauer erläutert wird - beim vorliegenden Datenkommunikationssystem 1 verzichtet werden kann, bzw. deren Funktion von den o.g. Telekommunikationsanlagen bzw. zentralen PBX-Rechnern 5, 15a, 15b übernommen werden kann).

Der entsprechende zentrale Rechner 8, 18a, 18b fungiert u.a. jeweils als "Mischpult", um die von den verschiedenen, an der Konferenz teilnehmenden Clients (z.B. die Clients 2a, 2b, 12a) über die entsprechenden Intranet-Datennetzwerke A, B, C jeweils separat an den entsprechenden zentralen Rechner 8, 18a, 18b gesendeten Sprach- und/oder Bild-Telefoniedaten zusammenzuführen bzw. zu mischen, und dann die entsprechenden - gemischten - Daten über die jeweiligen Intranet-Datennetzwerke A, B, C an die entsprechenden (übrigen) an der Konferenz teilnehmenden Clients 2a, 2b, 12a zu verschicken.

Zur Datenübertragung bzw. zur Steuerung der Datenübertragung wird dabei ein auf das TCP/IP-Protokoll aufgesetztes, "offenes" bzw. standardisiertes Protokoll verwendet werden, z.B. das H.225/H.245- bzw. H.323-Protokoll.

Auf einer (hier nicht dargestellten) Speichereinrichtung der entsprechenden Clients 2a, 2b, 12a bzw. zentralen Rechner 8, 18a, 18b muss hierzu eine Software geladen sein, die das entsprechende H.225/H.245- bzw. H.323-Protokoll unterstützt (insbesondere verstehen, und auswerten kann).

Jeder zentrale Rechner 8, 18a, 18b kann - zu einem bestimmten Zeitpunkt - maximal für eine vorbestimmte Anzahl von Clients 2a, 2b, 12a als "Mischpult" bzw. maximal für eine vorbestimmte Anzahl an - gleichzeitig - durchzuführenden Telefon- bzw. Videokonferenzen als Konferenz-Steuereinheit fungieren.

Kann - aufgrund Überlastung - einer der zentralen Rechner 8, 18a, 18b eine von bestimmten Clients 2a, 2b, 12a stammende Anfrage nach Durchführung einer Telefon- bzw. Videokonferenz nicht bearbeiten, übernimmt ein anderer zentraler Rechner 8, 18a, 18b Rechner dann die Steuerung der entsprechenden Telefon- bzw. Videokonferenz (d.h. fungiert für die jeweiligen Clients 2, 2b, 12a als Konferenz-Steuereinheit, insbesondere als "Mischpult").

Wie im folgenden noch genauer erläutert wird, kann beim in Figur 1 gezeigten Datenkommunikationssystem 1 zur Kommunikation zwischen den entsprechenden PBX-Rechnern 5, 15a, 15b (PBX = Private Branch Exchange) und den jeweiligen Clients 2a, 2b, 2c, 3a, 3b, 12a, 12b, 12c, 13a, 13b - parallel - z.B. sowohl ein auf das TCP/IP-Protokoll aufgesetztes, firmen-spezifisches, proprietäres Protokoll verwendet werden (z.B. ein generisches Protokoll der Siemens AG), beispielsweise ein entsprechendes herkömmliches TDM- bzw. PCM-Protokoll (TDM = Time Division Multiplex, PCM = Pulse Code Modulation), und ein - ebenfalls - auf das TCP/IP-Protokoll aufgesetztes, "offenes" bzw. standardisiertes Protokoll, z.B. das o.g. H.225/H.245- bzw. H.323-Protokoll (weshalb die PBX-Rechner 5, 15a, 15b - wie aus der folgenden Darstellung deutlich wird - eine der Funktion der zentralen Rechner 8, 18a, 18b entsprechende Funktion als Steuereinheiten zur Durchführung entsprechender, H.225/H.245- bzw. H.323-Protokoll-basierter und/oder TDM/PCM-Protokoll-basierter Telefon- und/oder Videokonferenzen übernehmen können (d.h. auf die zentralen Rechner 8, 18a, 18b kann - alternativ - verzichtet werden)).

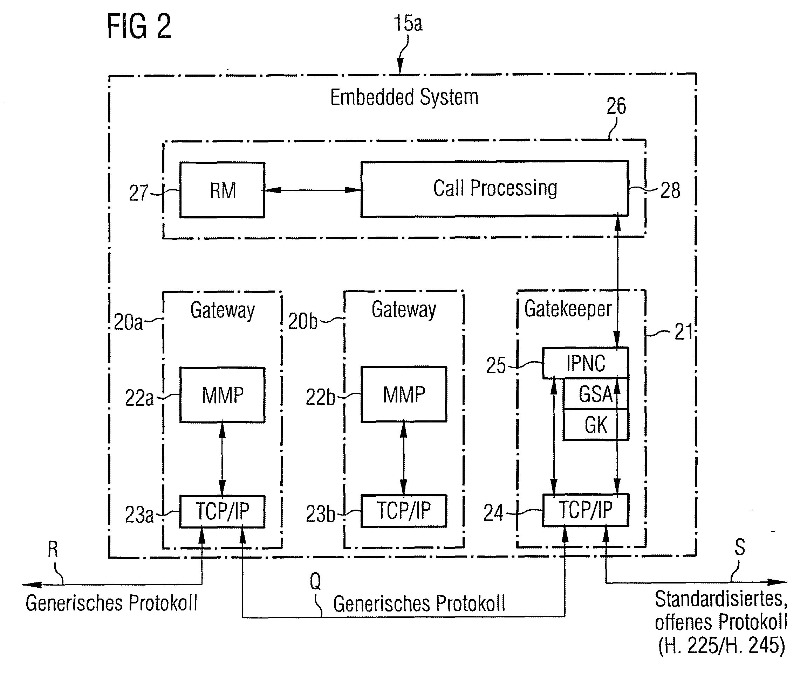

Wie in Fig. 2 dargestellt ist, weisen die PBX-Rechner (hier: der PBX-Rechner 15a, und entsprechend auch die - entsprechend ähnlich wie der PBX-Rechner 15a aufgebauten und eingerichteten - PBX-Rechner 5, 15b) hierzu jeweils mindestens eine - die Funktion eines Gateways übernehmende - Baugruppe 20a auf (oder mehrere, z.B. zwischen zwei und sieben Gateway-Baugruppen 20b, die entsprechend ähnlich aufgebaut und eingerichtet sind, wie die Gateway-Baugruppe 20a), sowie eine (insbesondere genau eine) - die Funktion eines Gatekeepers - übernehmende Baugruppe 21.

Der PBX-Rechner 15a ist beim vorliegenden Ausführungsbeispiel als proprietäres Computersystem ausgestaltet (d.h. als "embedded system"), alternativ ist z.B. auch eine Ausgestaltung als (nichtproprietäres) PC-System denkbar.

Die Gateway-Baugruppe 20a, 20b ist so eingerichtet, dass diese - sowohl mit der Gatekeeper-Baugruppe 21 (vgl. Pfeil Q), als auch mit den entsprechenden Clients 2a, 2b, 2c, 3a, 3b, 12a, 12b, 12c, 13a, 13b (vgl. Pfeil R) - (ausschließlich) über das o.g. generische bzw. firmen-spezifische, auf das TCP/IP-Protokoll aufgesetzte Protokoll, insbesondere das TDM- bzw. PCM-Protokoll kommuniziert.

Auf einer (hier nicht dargestellten) Speichereinrichtung der Gateway-Baugruppe 20a, 20b, insbesondere einer dort vorgesehenen TDM/PCM-Koppelfeld-Zugangseinrichtung 23a, 23b muss hierzu eine Software geladen sein, die das entsprechende TDM/PCM-Protokoll unterstützt (d.h. verstehen, und auswerten kann).

Wie in Figur 2 weiter gezeigt ist, weist die Gateway-Baugruppe 20a, 20b eine einen DSP, insbesondere einen MMP aufweisende Datenverarbeitungs-Einrichtung 22a, 22b auf (DSP = Digital Signal Processor; MMP = Multi Media Prozessor), die - über die TDM/PCM-Koppelfeld-Zugangseinrichtung 23a, 23b - an das TDM/PCM-Koppelfeld angeschlossen ist (so dass die Gateway-Baugruppe 20a, 20b, insbesondere die MMP-Datenverarbeitungs-Einrichtung 22a, 22b mit der Gatekeeper-Baugruppe 21 - Pfeil Q - bzw. einem oder mehreren Clients 2a, 2b, 2c, 3a, 3b, 12a, 12b, 12c, 13a, 13b - Pfeil R - kommunizieren kann).

Soll zwischen mehreren (insbesondere mehr als zwei, z.B. drei, vier oder fünf) - internen - Clients 12a, 12b, 12c, 13a, 13b (d.h. im gleichen Intranet-Datennetzwerk B wie der die Kommunikation jeweils zentral steuernde PBX-Rechner 15a enthaltenen Clients 12a, 12b, 12c, 13a, 13b) und/oder externen Clients 2a, 2b, 2c, 3a, 3b (d.h. in einem anderen Intranet-Datennetzwerk A, C als der die Kommunikation jeweils zentral steuernde PBX-Rechner 15a enthaltenen Clients 2a, 2b, 2c, 3a, 3b) eine Telefon- und/oder Videokonferenz abgehalten werden, fungiert - wie im folgenden noch genauer erläutert wird - die im jeweiligen PBX-Rechner 15a vorgesehene (ggf. von der Gatekeeper-Baugruppe 21 entsprechend ausgewählte) Gateway-Baugruppe 20a (insbesondere die MMP-Datenverarbeitungs-Einrichtung 22a) als "Mischpult", um die von den verschiedenen, an der Konferenz teilnehmenden Clients 2a, 2b, 2c, 3a, 3b, 12a, 12b, 12c, 13a, 13b jeweils separat an den PBX-Rechner 15a gesendeten Sprach- und/oder Bild-Telefoniedaten zusammenzuführen bzw. zu mischen.

Dabei können die Daten von den entsprechenden Clients 2a, 2b, 2c, 3a, 3b, 12a, 12b, 12c, 13a, 13b - je nachdem, ob diese das o.g. "offene" bzw. standardisierte, H.225/H.245- bzw. H.323-Protokoll, oder das o.g. firmen-spezifische bzw. generische TDM/PCM-Protokoll unterstützen - jeweils beliebig entsprechend entweder H.225/H.245- bzw. H.323-Protokoll-basiert, oder TDM/PCM-Protokoll-basiert versendet werden (wobei - bei Versendung auf Basis eines H.225/H.245- bzw. H.323-Protokolls - die Daten (anders als bei TDM/PCM-Protokoll-basiert versendeten Daten) nicht direkt von der Gateway-Baugruppe 20a ausgewertet werden (entsprechend wie durch Pfeil R veranschaulicht), sondern von der Gatekeeper-Baugruppe 21 zunächst in entsprechende TDM/PCM-Protokoll-basierte Daten umgesetzt, und dann an die Gateway-Baugruppe 20a weitergeleitet werden (entsprechend wie durch Pfeil S und Pfeil Q veranschaulicht)).

Die - entsprechend gemischten - Daten werden von der Gateway-Baugruppe 20a jeweils stets in der Form von TDM/PCM-Protokoll-basierten Daten ausgegeben (wobei - vor der Versendung der Daten an lediglich das o.g. standardisierte, H.225/H.245- bzw. H.323-Protokoll, nicht aber das o.g. firmen-spezifische bzw. generische TDM/PCM-Protokoll unterstützende Clients 2a, 2b, 2c, 3a, 3b, 12a, 12b, 12c, 13a, 13b - die Daten (anders als bei das TDM/PCM-Protokoll unterstützenden Clients 2a, 2b, 2c, 3a, 3b, 12a, 12b, 12c, 13a, 13b) nicht direkt an die entsprechenden Clients weitergeleitet werden (entsprechend wie durch Pfeil R veranschaulicht), sondern von der Gatekeeper-Baugruppe 21 zunächst in entsprechende H.225/H.245- bzw. H.323-Protokoll-basierte Daten umgesetzt, und dann erst an die entsprechenden Clients 2a, 2b, 2c, 3a, 3b, 12a, 12b, 12c, 13a, 13b weitergeleitet werden (entsprechend wie durch Pfeil S und Pfeil Q veranschaulicht)) - die entsprechenden Protokolle bzw. die Protokoll-Auswahl wird also durch die Gatekeeper-Baugruppe 21 "gekapselt".

Neben der o.g. "Mischpult"-Funktion erfüllt die Gateway-Baugruppe 20a - für sämtliche, vorgesehene, insbesondere am jeweiligen Kommunikations-Prozess, z.B. der entsprechenden Telefon- und/oder Videokonferenz teilnehmenden Clients 2a, 2b, 2c, 3a, 3b, 12a, 12b, 12c, 13a, 13b eine sog. "Music On Hold"-Funktion (MoH-Funktion), d.h. spielt zu entsprechenden Zeitpunkten - z.B. während des Vermittlungsvorgangs - bei den entsprechenden Clients 2a, 2b, 2c, 3a, 3b, 12a, 12b, 12c, 13a, 13b entsprechende, auf einer nicht gezeigten Speichereinrichtung gespeicherte - Sprach- bzw. Ton-Signale (bzw. entsprechende Bild-Signale) ein (z.B. eine Zwischenmelodie).

Des weiteren sorgt - wie bereits oben erläutert - die entsprechende Gateway-Baugruppe 20a (insbesondere die dort vorgesehene TDM/PCM-Koppelfeld-Zugangseinrichtung 23a) für die Übertragung der Daten an das bzw. den Empfang der Daten vom TDM/PCM-Koppelfeld-Netz (z.B. - über die Leitung 9b - über das interne Intranet-Datennetzwerk B, bzw. - z.B. über die Leitung 9a - über das externe Telefonnetz). (Demgegenüber sorgt für die Gatekeeper-Baugruppe 20b eine dort vorgesehene Schnittstellen-Einrichtung 24 - je nach Bedarf - entweder für eine TDM/PCM- oder eine H.225/H.245-Protokoll-basierte Datenübertragung (z.B. - über die Leitung 9b - über das interne Intranet-Datennetzwerk B, bzw. - z.B. über die Leitung 19a - extern über das Internet)).

Die Steuerung der Gateway-Baugruppe 20a (sowie der weiteren, ggf. vorgesehenen Gateway-Baugruppen 20b, und - ggf. - weiterer, im Datenkommunikationssystem 1 zur Durchführung entsprechender Telefon- und/oder Videokonferenzen, bzw. als Mischpult geeigneter, z.B. TDM/PCM-basierter "Ressourcen", insbesondere von (z.B. in den weiteren Intranet-Datennetzwerken A, C) vorhandenen Gateway-Baugruppen - falls diese gerade verfügbar sind -) erfolgt durch eine in der Gatekeeper-Baugruppe 21 vorgesehene IP-Netzwerk-Steuereinrichtung 25 bzw. einen IP Network Controller (IPNC) (und zwar - wie in Figur 2 durch den Pfeil Q veranschaulicht - durch Versendung entsprechender TDM/PCM-Protokoll-basierter Steuerdaten).

Entsprechend erfolgt auch die Steuerung von entsprechenden - im jeweiligen Intranet-Datennetzwerk B vorhandenen - H.225/H.245- bzw. H.323-Protokoll-basierten "Ressourcen", z.B. von - gerade verfügbaren - durch den o.g. zentralen Rechner 18a bereitgestellten "Ressourcen", und ggf. von weiteren - gerade verfügbaren - im Datenkommunikationssystem 1 zur Durchführung entsprechender Telefon- und/oder Videokonferenzen, bzw. als Mischpult geeigneter, H.225/H.245- bzw. H.323-Protokoll-basierter "Ressourcen", insbesondere der o.g., in den weiteren Intranet-Datennetzwerken A, C (oder z.B. im Internet) durch die zentralen Rechner 8, 18b bereitgestellten "Ressourcen", ebenfalls durch die in der Gatekeeper-Baugruppe 21 vorgesehene IP-Netzwerk-Steuereinrichtung 25 (und zwar - wie in Figur 2 durch den Pfeil S veranschaulicht - durch Versendung entsprechender H.225/H.245- bzw. H.323-Protokoll-basierter Steuerdaten).

Vom PBX-Rechner 15a, insbesondere von der Gatekeeper-Baugruppe 21 aus kann also - unter Steuerung der IP-Netzwerk-Steuereinrichtung 25 - (ja nach Bedarf) sowohl auf im jeweiligen Intranet-Datennetzwerken B vorhandene, d.h. "lokale" Ressourcen zugegriffen werden, als auch auf in anderen Intranet-Datennetzwerken A, B bzw. über das Internet oder das Telefonnetz abrufbare "entfernte" Ressourcen (und zwar wahlweise unter Nutzung z.B. des H.225/H.245-Protokolls, oder z.B. des TDM/PCM-Protokolls - hierdurch können sowohl H.323-Protokoll- als auch TDM/PCM-Protokoll-basierte Ressourcen genutzt werden).

Jede "Ressource" (d.h. jede Gateway-Baugruppe 20a, 20b, jeder Rechner 8, 18a, 18b, etc.) kann - zu einem bestimmten Zeitpunkt - maximal für eine vorbestimmte Anzahl von Clients 2a, 2b, 2c, 3a, 3b, 12a, 12b, 12c, 13a, 13b als "Mischpult" dienen (bzw. - zu einem bestimmten Zeitpunkt - maximal für eine vorbestimmte Anzahl an Telefon- bzw. Videokonferenzen die entsprechende Datenverarbeitung vornehmen).

Die Zuteilung der Ressourcen erfolgt - auf entsprechende Anfrage der Clients 2a, 2b, 2c, 3a, 3b, 12a, 12b, 12c, 13a, 13b hin - (abhängig von der momentanen Auslastung bzw. Verfügbarkeit der Ressourcen) durch eine (eine Ressource-Management-(RM-) Einrichtung 27 und eine Call Processing- (CP-) Einrichtung 28 aufweisende) - mit der o.g. IP-Netzwerk-Steuereinrichtung 25 kommunizierende - Ressourcen-Steuer-Einrichtung 26.

Kann - aufgrund Überlastung - eine entsprechende Ressource eine von bestimmten Clients 2a, 2b, 2c, 3a, 3b, 12a, 12b, 12c, 13a, 13b stammende Anfrage nach Durchführung einer Telefon- bzw. Videokonferenz nicht bearbeiten, veranlasst die Gatekeeper-Baugruppe 21 (genauer: die Resourcen-Steuer-Einrichtung 26 über die IP-Netzwerk-Steuereinrichtung 25) durch Versendung entsprechender TDM/PCM- oder H.225/H.245- bzw. H.323-Protokoll-basierter Steuerdaten, dass eine andere der o.g. Ressourcen die entsprechende Telefon- bzw. Videokonferenz übernimmt (d.h. für die jeweiligen Clients 2a, 2b, 2c, 3a, 3b, 12a, 12b, 12c, 13a, 13b als "Mischpult" fungiert).

Hierdurch wird ein einheitliches Ressource-Management erreicht, unabhängig von der Art und dem Ort der angeschlossenen Ressource, bzw. eine einheitliche Systemsteuerschnittstelle zur Kontrolle von sowohl H.323-Standard- als auch TDM/PCMbasierten, proprietären Ressourcen.

Dabei können - durch die oben beschriebene Modularisierung / Aufsplittung der Gatekeeper- und Gateway-Funktionen auf verschiedene Baugruppen - H.323-Stack-Lizenzen eingespart werden.

## Patentansprüche

1. Datenkommunikationssystem (1) mit mehreren Clients (12a, 12b, 12c, 13a, 13b),
- mit einer Mehrzahl von ein erstes Datenübertragungs-Protokoll unterstützenden Telefon- und/oder Videokonferenz-Datenverarbeitungs-Einrichtungen (20a, 20b),
- mit einer sowohl das erste, als auch ein zweites Datenübertragungs-Protokoll unterstützenden Datenverarbeitungs-Einrichtung (21), die empfangene Daten derart umwandelt und an eine der Telefon- und/oder Videokonferenz-Datenverarbeitungs-Einrichtungen (20a, 20b) weiterleitet, dass diese sowohl von das erste, als auch das zweite Datenübertragungs-Protokoll unterstützenden Clients (12a, 12b, 12c, 13a, 13b) genutzt werden kann,
**dadurch gekennzeichnet,**
**dass** eine Ressourcen-Steuer-Einrichtung (26) vorgesehen ist, die in Fällen, in denen eine Anfrage durch eine der Telefon- und/oder Videokonferenz-Datenverarbeitungs-Einrichtungen (20a, 20b) nicht bearbeitet werden kann veranlasst, dass eine andere der Videokonferenz-Datenverarbeitungs-Einrichtungen (20, 20b) die Anfrage übernimmt.

2. Datenkommunikationssystem (1) nach Anspruch 1,
**dadurch gekennzeichnet,**
**dass** die Telefon- und/oder Videokonferenz-Datenverarbeitungs-Einrichtung (20a) und die Datenverarbeitungs-Einrichtung (21) in einem Rechner (15a), angeordnet sind.

3. Datenkommunikationssystem (1) nach Anspruch 2,
**dadurch gekennzeichnet,**
**dass** der Rechner (15a) ein PBX-Rechner ist.

4. Datenkommunikationssystem (1) nach einem der vorhergehenden Ansprüche,
**dadurch gekennzeichnet,**
**dass** das zweite Datenübertragungs-Protokoll ein offenes, standardisiertes Protokoll ist.

5. Datenkommunikationssystem (1) nach Anspruch 4,
**dadurch gekennzeichnet,**
**dass** das zweite Datenübertragungs-Protokoll ein H.323- bzw. H.225/H.245-basiertes oder ein SIP-basiertes Protokoll ist.

6. Datenkommunikationssystem (1) nach einem der vorhergehenden Ansprüche,
**dadurch gekennzeichnet,**
**dass** das erste Datenübertragungs-Protokoll ein proprietäres bzw. generisches Protokoll ist.

7. Datenkommunikationssystem (1) nach einem der vorhergehenden Ansprüche,
**dadurch gekennzeichnet,**
**dass** das erste Datenübertragungs-Protokoll ein PCM- bzw. TDM-basiertes Protokoll ist.

8. Datenkommunikationssystem (1) nach einem der vorhergehenden Ansprüche,
**dadurch gekennzeichnet,**
**dass** das erste und/oder das zweite Datenübertragungs-Protokoll ein TCP/IP-basiertes Datenübertragungs-Protokoll ist.

9. Datenkommunikationssystem (1) nach einem der vorhergehenden Ansprüche,
**dadurch gekennzeichnet,**
**dass** das erste Datenübertragungs-Protokoll unterstützende Clients (12a, 12b, 12c, 13a, 13b), und das zweite Datenübertragungs-Protokoll unterstützende Clients (12a, 12b, 12c, 13a, 13b) gleichzeitig unter Nutzung der Telefon- und/oder Videokonferenz-Datenverarbeitungs-Einrichtung (20a) gemeinsam miteinander eine Telefon- und/oder Videokonferenz abhalten.

10. Datenkommunikationssystem (1) nach einem der vorhergehenden Ansprüche,
**dadurch gekennzeichnet,**
**dass** einer oder mehrere der Clients (12a, 12b, 12c, 13a, 13b) an ein Intranet-Datennetzwerk (B) angeschlossen sind.

11. Datenkommunikationssystem (1) nach Anspruch 10,
**dadurch gekennzeichnet,**
**dass** einer oder mehrere der Clients (12a, 12b, 12c, 13a, 13b) außerhalb des Intranet-Datennetzwerks (B) angeordnet, angeschlossen sind.

12. Datenkommunikationssystem (1) nach einem der vorhergehenden Ansprüche,
**dadurch gekennzeichnet,**
**dass** die Telefon- und/oder Videokonferenz-Datenverarbeitungs-Einrichtung (20a) an das Intranet-Datennetzwerk (B) angeschlossen ist.

13. Datenkommunikationssystem (1) nach einem der vorhergehenden Ansprüche,
**dadurch gekennzeichnet,**
**dass** eine weitere, das erste Datenübertragungs-Protokoll unterstützende Telefon- und/oder Videokonferenz-Datenverarbeitungs-Einrichtung (20b) vorgesehen ist, die statt der Telefon- und/oder Videokonferenz-Datenverarbeitungs-Einrichtung (20a) verwendet werden kann.

14. Datenkommunikationssystem (1) nach Anspruch 13,
**dadurch gekennzeichnet,**
**dass** die weitere Telefon- und/oder Videokonferenz-Datenverarbeitungs-Einrichtung (20b) an das Intranet-Datennetzwerk (B) angeschlossen ist, oder
**dass** die weitere Telefon- und/oder Videokonferenz-Datenverarbeitungs-Einrichtung (20b) außerhalb des Intranet-Datennetzwerks (B) angeordnet, ist.

15. Datenkommunikationssystem (1) nach einem der vorhergehenden Ansprüche,
**dadurch gekennzeichnet,**
**dass** eine zusätzliche, das zweite Datenübertragungs-Protokoll unterstützende Telefon- und/oder Videokonferenz-Datenverarbeitungs-Einrichtung (8, 18a) vorgesehen ist, die anstelle der Telefon- und/oder Videokonferenz-Datenverarbeitungs-Einrichtung (20a) verwendet werden kann.

16. Datenkommunikationssystem (1) nach Anspruch 15,
**dadurch gekennzeichnet,**
**dass** die zusätzliche Telefon- und/oder Videokonferenz-Datenverarbeitungs-Einrichtung (18a) an das Intranet-Datennetzwerk (B) angeschlossen ist, oder
**dass** die zusätzliche Telefon- und/oder videokonferenz-Datenverarbeitungs-Einrichtung (18a) außerhalb des Intranet-Datennetzwerks (B) angeordnet ist.

17. Rechner (15a), welcher so ausgestaltet und eingerichtet ist, dass er als Rechner (5, 15a, 25) in einem Datenkommunikationssystem (1) nach einem der Ansprüche 2 bis 16 verwendbar ist,
- welcher eine Mehrzahl von ein erstes Datenübertragungs-Protokoll unterstützenden Telefon- und/oder Videokonferenz-Datenverarbeitungs-Einrichtungen (20a, 20b) aufweist,
- welcher eine sowohl das erste, als auch ein zweites Datenübertragungs-Protokoll unterstützende Datenverarbeitungs-Einrichtung (21) aufweist, die empfangene Daten derart umwandelt, und an eine der Telefon- und/oder Videokonferenz-Datenverarbeitungs-Einrichtungen (20a, 20b) weiterleitet, dass diese sowohl von das erste, als auch das zweite Datenübertragungs-Protokoll unterstützenden Clients (12a, 12b, 12c, 13a, 13b) genutzt werden kann,
**dadurch gekennzeichnet,**
**dass**, eine Ressourcen-Steuer-Einrichtung (26) vorgesehen ist, die in Fällen, in denen eine Anfrage durch eine der Telefon- und/oder Videokonferenz-Datenverarbeitungs-Einrichtungen (20a, 20b) nicht bearbeitet werden kann veranlasst,
**dass** eine andere der Videokonferenz-Datenverarbeitungs-Einrichtungen (20, 20b) die Anfrage übernimmt.

18. Datenkommunikationsverfahren zur Verwendung in einem Datenkommunikationssystem (1), nach einem der Ansprüche 1 bis 16, mit mehreren Clients (12a, 12b, 12c, 13a, 13b),
- mit einer Mehrzahl von ein erstes Datenübertragungs-Protokoll unterstützenden Telefon- und/oder Videokonferenz-Datenverarbeitungs-Einrichtungen (20a, 20b),
- mit einer sowohl das erste, als auch ein zweites Datenübertragungs-Protokoll unterstützenden Datenverarbeitungs-Einrichtung (21),
- mit einer Ressourcen-Steuer-Einrichtung (26),
wobei das Verfahren die folgenden Schritt aufweist:
- Umwandeln von empfangenen Daten durch die Datenverarbeitungs-Einrichtung (21), und
Weiterleiten der Daten an eine Telefon- und/oder Videokonferenz-Datenverarbeitungs-Einrichtung (20a) derart, dass diese sowohl von das erste, als auch das zweite Datenübertragungs-Protokoll unterstützenden Clients (12a, 12b, 12c, 13a, 13b) genutzt werden kann,
**dadurch gekennzeichnet,**
**dass**, in Fällen, in denen die Anfrage durch die Telefon- und/oder Videokonferenz-Datenverarbeitungs-Einrichtung (20a) nicht bearbeitet werden kann veranlasst wird, dass eine andere Videokonferenz-Datenverarbeitungs-Einrichtung (20b) die Anfrage übernimmt.

## Claims

1. Data communications system (1) with a number of clients (12a, 12b, 12c, 13a, 13b),
- with a plurality of telephone and/or video conference data processing devices (20a, 20b) supporting a first data transmission protocol,
- with a data processing device (21) supporting both the first and also a second data transmission protocol, which converts the received data and forwards it to a telephone and/or video conference data processing device (20a, 20b) such that this can be used by clients (12a, 12b, 12c, 13a, 13b) both the first and also the second data transmission protocol,
**characterized in that**
a resource control device (26) is provided, which in cases in which a request cannot be processed by a telephone and/or video conference data processing devices (20a, 20b), causes another of the video conference data processing devices (20, 20b) to take over the request.

2. Data communications system (1) in accordance with claim 1,
**characterized in that**,
the telephone and/or video conference data processing device (20a) and the data processing device (21) are arranged in a computer (15a).

3. Data communications system (1) in accordance with claim 2, **characterized in that** the computer (15a) is a PBX computer.

4. Data communications system (1) in accordance with one of the previous claims,
**characterized in that**,
the second data transmission protocol is an open, standardized protocol.

5. Data communications system (1) in accordance with claim 4,
**characterized in that**,
the second data transmission protocol is an H.323 or H.225/H.245-based protocol or an SIP-based protocol.

6. Data communications system (1) in accordance with one of the previous claims,
**characterized in that**,
the first data transmission protocol is a proprietary or generic protocol.

7. Data communications system (1) in accordance with one of the previous claims,
**characterized in that**,
the first data transmission protocol is a PCM- or TDM-based protocol.

8. Data communications system (1) in accordance with one of the previous claims,
**characterized in that**,
the first and/or the second data transmission protocol is a TCP/IP-based data transmission protocol.

9. Data communications system (1) in accordance with one of the previous claims,
**characterized in that**,
clients (12a, 12b, 12c, 13a, 13b) supporting the first data transmission protocol and clients (12a, 12b, 12c, 13a, 13b) supporting the second data transmission protocol can jointly hold a telephone and/or video conference with each other simultaneously by using the telephone and/or video conference data processing device (20a).

10. Data communications system (1) in accordance with one of the previous claims,
**characterized in that**,
one or more of the clients (12a, 12b, 12c, 13a, 13b) are connected to an Intranet data network (B).

11. Data communications system (1) in accordance with claim 10,
**characterized in that**,
one or more of the clients (12a, 12b, 12c, 13a, 13b) are arranged connected outside the Intranet data network (B).

12. Data communications system (1) in accordance with one of the previous claims,
**characterized in that**,
the telephone and/or video conference data processing unit (20a) is connected to the Intranet data network (B).

13. Data communications system (1) in accordance with one of the previous claims,
**characterized in that**,
a further telephone and/or video conference data processing device (20b) supporting the first data transmission protocol is provided which can be used instead of the telephone and/or video conference data processing device (20a).

14. Data communications system (1) in accordance with claim 13,
**characterized in that**,
the further telephone and/or video conference data processing device (20b) is connected to the Intranet data network (B), or that the further telephone and/or video conference data processing device (20b) arranged outside the Intranet data network (B).

15. Data communications system (1) in accordance with one of the previous claims,
**characterized in that**,
an additional telephone and/or video conference data processing device (8, 18a), supporting the second data transmission protocol is provided, which can be used instead of the telephone and/or video conference data processing device (20a) .

16. Data communications system (1) in accordance with claim 15,
**characterized in that**,
the additional telephone and/or video conference data processing device (18a) is connected to the Intranet data network (B), or that the additional telephone and/or video conference data processing device (18a) is arranged outside the Intranet data network (B).

17. Computer (15a), which is set up and embodied such that it can be used as a computer (5, 15a, 25) in a data communications system (1) in accordance with one of the claims 2 to 16,
- which features a plurality of telephone and/or video conference data processing devices (20a, 20b) supporting a first data transmission protocol,
- which features a data processing device (21) supporting both the first and also a second data transmission protocol, which converts the received data and forwards it to a telephone and/or video conference data processing device (20a, 20b) such that this can be used by clients (12a, 12b, 12c, 13a, 13b) both the first and also the second data transmission protocol,
**characterized in that**
a resource control device (26) is provided, which in cases in which a request cannot be processed by a telephone and/or video conference data processing devices (20a, 20b), causes another of the video conference data processing devices (20, 20b) to take over the request.

18. Data communication method for use in a data communications system (1) in accordance with one of the claims 1 to 16, with a number of clients (12a, 12b, 12c, 13a, 13b),
- with a plurality of telephone and/or video conference data processing devices (20a, 20b) supporting a first data transmission protocol,
- with a data processing device (21) supporting both the first and also a second data transmission protocol,
- with of a resource-control device (26),
whereby the method features the following steps:
- Conversion of received data by the data processing device (21), and
Forwarding of the data to a telephone and/or video conference data processing device (20a) such that this data can be used by clients (12a, 12b, 12c, 13a, 13b) supporting both the first, and also the second data transmission protocol
**characterized in that**
in cases in which the request cannot be processed by a telephone and/or video conference data processing device (20a, 20b), another video conference data processing device (20b) can be made to take over the request.

## Revendications

1. Système de communication de données (1) avec plusieurs clients (12a, 12b, 12c, 13a, 13b), avec
- une pluralité d'équipements de traitement de données de conférences téléphoniques et/ou de visioconférences (20a, 20b) supportant un premier protocole de transmission de données,
- un équipement de traitement de données (21) supportant non seulement le premier, mais aussi un deuxième protocole de transmission de données, lequel équipement convertit des données reçues, et les retransmet à l'un des équipements de traitement de données de conférences téléphoniques et/ou de visioconférences (20a, 20b), de manière telle que celui-ci peut être utilisé par des clients (12a, 12b, 12c, 13a, 13b) supportant non seulement le premier, mais aussi le deuxième protocole de transmission de données,
**caractérisé en ce qu'**est prévu un dispositif de commande de ressources (26) qui, dans les cas dans lesquels une demande ne peut pas être traitée par l'un des équipements de traitement de données de conférences téléphoniques et/ou de visioconférences (20a, 20b), fait en sorte qu'un autre des équipements de traitement de données de visioconférences (20, 20b) prend la demande en charge.

2. Système de communication de données (1) selon la revendication 1, **caractérisé en ce que** l'équipement de traitement de données de conférences téléphoniques et/ou de visioconférences (20a) et l'équipement de traitement de données (21) sont disposés dans un ordinateur (15a).

3. Système de communication de données (1) selon la revendication 2, **caractérisé en ce que** l'ordinateur (15a) est un ordinateur PBX.

4. Système de communication de données (1) selon l'une des revendications précédentes, **caractérisé en ce que** le deuxième protocole de transmission de données est un protocole ouvert standardisé.

5. Système de communication de données (1) selon la revendication 4, **caractérisé en ce que** le deuxième protocole de transmission de données est un protocole basé sur H.323 resp. H.225/H.245 ou un protocole basé sur SIP.

6. Système de communication de données (1) selon l'une des revendications précédentes, **caractérisé en ce que** le premier protocole de transmission de données est un protocole propriétaire resp. générique.

7. Système de communication de données (1) selon l'une des revendications précédentes, **caractérisé en ce que** le premier protocole de transmission de données est un protocole basé sur PCM resp. TDM.

8. Système de communication de données (1) selon l'une des revendications précédentes, **caractérisé en ce que** le premier et/ou le deuxième protocole de transmission de données est un protocole de transmission de données basé sur TCP/IP.

9. Système de communication de données (1) selon l'une des revendications précédentes, **caractérisé en ce que** des clients (12a, 12b, 12c, 13a, 13b) qui supportent le premier protocole de transmission de données et des clients (12a, 12b, 12c, 13a, 13b) qui supportent le deuxième protocole de transmission de données tiennent simultanément, en commun, ensemble une conférence téléphonique et/ou une visioconférence en utilisant l'équipement de traitement de données de conférences téléphoniques et/ou de visioconférences (20a).

10. Système de communication de données (1) selon l'une des revendications précédentes, **caractérisé en ce qu'**un ou plusieurs des clients (12a, 12b, 12c, 13a, 13b) sont connectés à un réseau de données intranet (B).

11. Système de communication de données (1) selon la revendication 10, **caractérisé en ce qu'**un ou plusieurs des clients (12a, 12b, 12c, 13a, 13b) sont situés en dehors du réseau de données intranet (B).

12. Système de communication de données (1) selon l'une des revendications précédentes, **caractérisé en ce que** l'équipement de traitement de données de conférences téléphoniques et/ou de visioconférences (20a) est connecté au réseau de données intranet (B).

13. Système de communication de données (1) selon l'une des revendications précédentes, **caractérisé en ce qu'**est prévu un autre équipement de traitement de données de conférences téléphoniques et/ou de visioconférences (20b) supportant le premier protocole de transmission, lequel équipement peut être utilisé au lieu de l'équipement de traitement de données de conférences téléphoniques et/ou de visioconférences (20a).

14. Système de communication de données (1) selon la revendication 13, **caractérisé en ce que** l'autre équipement de traitement de données de conférences téléphoniques et/ou de visioconférences (20b) est connecté au réseau de données intranet (B) ou **en ce que** l'autre équipement de traitement de données de conférences téléphoniques et/ou de visioconférences (20b) est situé en dehors du réseau de données intranet (B).

15. Système de communication de données (1) selon l'une des revendications précédentes, **caractérisé en ce qu'**est prévu un équipement supplémentaire de traitement de données de conférences téléphoniques et/ou de visioconférences (8, 18a), supportant le deuxième protocole de transmission de données, lequel équipement peut être utilisé au lieu de l'équipement de traitement de données de conférences téléphoniques et/ou de visioconférences (20a).

16. Système de communication de données (1) selon la revendication 15, **caractérisé en ce que** l'équipement supplémentaire de traitement de données de conférences téléphoniques et/ou de visioconférences (18a) est connecté au réseau de données intranet (B) ou **en ce que** l'équipement supplémentaire de traitement de données de conférences téléphoniques et/ou de visioconférences (18a) est situé en dehors du réseau de données intranet (B).

17. Ordinateur (15a), configuré et aménagé de manière telle qu'il peut être utilisé en tant qu'ordinateur (5, 15a, 25) dans un système de communication de données (1) selon l'une des revendications 2 à 16, lequel
- comporte une pluralité d'équipements de traitement de données de conférences téléphoniques et/ou de visioconférences (20a, 20b) qui supportent un premier protocole de transmission de données,
- comporte un équipement de traitement de données (21) qui supporte non seulement le premier, mais aussi un deuxième protocole de transmission de données, lequel équipement convertit des données reçues, et les retransmet à l'un des équipements de traitement de données de conférences téléphoniques et/ou de visioconférences (20a, 20b), de manière telle que celui-ci peut être utilisé par des clients (12a, 12b, 12c, 13a, 13b) supportant non seulement le premier, mais aussi le deuxième protocole de transmission de données,
**caractérisé en ce qu'**est prévu un dispositif de commande de ressources (26) qui, dans les cas dans lesquels une demande ne peut pas être traitée par l'un des équipements de traitement de données de conférences téléphoniques et/ou de visioconférences (20a, 20b), fait en sorte qu'un autre des équipements de traitement de données de visioconférences (20, 20b) prend la demande en charge.

18. Procédé de communication de données destiné à être utilisé dans un système de communication de données (1) selon l'une des revendications 1 à 16, avec plusieurs clients (12a, 12b, 12c, 13a, 13b), avec
- une pluralité d'équipements de traitement de données de conférences téléphoniques et/ou de visioconférences (20a, 20b) supportant un premier protocole de transmission de données,
- un équipement de traitement de données (21) supportant non seulement le premier, mais aussi un deuxième protocole de transmission de données,
- un dispositif de commande de ressources (26), le procédé comportant les étapes suivantes:
- conversion de données reçues par l'équipement de traitement de données (21) et
- retransmission des données à un équipement de traitement de données de conférences téléphoniques et/ou de visioconférences (20a) de manière telle que celui-ci peut être utilisé par des clients (12a, 12b, 12c, 13a, 13b) supportant non seulement le premier, mais aussi le deuxième protocole de transmission de données,
**caractérisé en ce que**, dans les cas dans lesquels une demande ne peut pas être traitée par l'équipement de traitement de données de conférences téléphoniques et/ou de visioconférences (20a), il est fait en sorte qu'un autre équipement de traitement de données de visioconférences (20b) prend la demande en charge.
